# EUROPÄISCHE PATENTANMELDUNG

(11) **EP 2 716 191 A1**
(43) Veröffentlichungstag der Anmeldung: **09.04.2014**
(21) Anmeldenummer: 12187478.8
(22) Anmeldetag: 05.10.2012
(51) Int. Cl.: A47J 36/24

(54) **Vorrichtung zum Warmhalten von Speisen**

(71) Anmelder: Team-Kalorik-Group N.V., 1640 Rhode-Saint-Genese (BE)
(72) Erfinder: Stolle, Michael, B-1180 Bruessel (BE)
(74) Vertreter: Reitstötter - Kinzebach

(57) **Zusammenfassung**

Die vorliegende Erfindung betrifft eine Vorrichtung zum Erwärmen oder Warmhalten von Speisen. Die Vorrichtung umfasst ein Gehäuse mit mindestens einer Öffnung zum Auffüllen oder zur Entnahme der Speisen, einen Innenraum, der durch das Gehäuse gebildet wird und wenigstens eine im Innenraum des Gehäuses angeordnete elektromagnetische Strahlungsquelle zum Abstrahlen von Wärmestrahlung. Erfindungsgemäß ist die Vorrichtung dadurch gekennzeichnet, dass im Innenraum des Gehäuses wenigstens eine UV-Lichtquelle zur Ab-strahlung von UV-Strahlung angeordnet ist, die eine UV-Desinfizierung des Innenraums erlaubt.

## Beschreibung

Die Erfindung betrifft eine Vorrichtung zum Erwärmen oder Warmhalten von Speisen mittels einer elektromagnetischen Strahlungsquelle zum Abstrahlen von Wärmestrahlung.

Vorrichtungen dieser Art finden in der Gastronomie, beispielsweise in Fastfood-Restaurants Anwendung. Sie können neben dem Erwärmen und Warmhalten der Speisen auch der attraktiven Präsentation dienen. Seit einiger Zeit sind gegenüber herkömmlichen elektrischen Heizelementen, beispielsweise durch Heizspiralen beheizbare Bleche, zunehmend auch elektromagnetische Strahlungsquellen, insbesondere Infrarotstrahler, in Gebrauch gekommen, die die Speisen mit infraroter elektromagnetischer Strahlung beaufschlagen.

Der Vorteil des Einsatzes elektromagnetischer Strahlungsquellen liegt in der höheren Energieeffizienz, einer gleichmäßigeren Wärmeverteilung und der gleichzeitigen Beleuchtungsmöglichkeit.

In der GB 2 349 454 A ist eine durch einen Infrarotstrahler beheizbare Essensauslage angegeben, bei der eine speziell designte Abstrahlplatte vor der Strahlungsquelle für eine günstige Abstrahlcharakteristik der elektromagnetischen Strahlung sorgt. Um das Bedienpersonal vor möglichen Verletzungen durch Kontakt mit heißen Gehäuseteilen zu schützen, werden Metall- oder Maschendrahtgitter um die heißen Stellen herum vorgeschlagen oder aber der Gebrauch von Nylontabletts als Unterlage für die angebotenen Speisen.

Neben der Verletzungsgefahr durch Berühren von heißen Gehäuseteilen besteht ein weiterer Nachteil darin, dass durch die geöffnete Stirnseite der Essensauslage Keime in die Aufbewahrungszone eindringen können. Dies ist insbesondere für einen langen Präsentationszeitraum der Speisen und für jene Bereiche der Aufbewahrungszonen mit nur mäßigen Warmhaltetemperaturen ein Problem.

Es ist die Aufgabe der vorliegenden Erfindung, eine Vorrichtung der genannten Art bereitzustellen, die die genannten Nachteile abmildert und damit höheren Anforderungen aus hygienischer und arbeitssicherheitstechnischer Sicht genügt.

Erfindungsgemäß wird diese Aufgabe durch eine Vorrichtung mit den Merkmalen des Anspruchs 1 gelöst. Vorteilhafte Aus- und Weiterbildungen ergeben sich aus den abhängigen Ansprüchen.

Die erfindungsgemäße Vorrichtung zum Erwärmen oder Warmhalten von Speisen umfasst ein Gehäuse mit mindestens einer Öffnung zum Auffüllen oder zur Entnahme der Speisen, einen Innenraum, der durch das Gehäuse gebildet wird und wenigstens eine im Innenraum des Gehäuses angeordnete elektromagnetische Strahlungsquelle zum Abstrahlen von Wärmestrahlung. Erfindungsgemäß ist die Vorrichtung dadurch gekennzeichnet, dass im Innenraum des Gehäuses wenigstens eine UV-Lichtquelle zur Abstrahlung von UV-Strahlung angeordnet ist. Somit kann eine einfache und wirkungsvolle UV-Desinfektion des Innenraums durchgeführt und die mirkobiellle Belastung der Arbeitsflächen und der Luft im Innenraum wirksam reduziert werden.

Vorzugsweise erzeugt die UV-Lichtquelle eine UV-Strahlung, deren Spektrum Peaks bei 254nm und/oder bei 185 nm aufweist, was eine besonders wirksame Desinfektion gewährleistet. Eine solche UV-Strahlung kann beispielsweise durch eine oder mehrere Niederdruck-Quecksilberdampflampen erzeugt werden.

Je nach Anbringung der UV-Lichtquelle im Gehäuse kann man vorsehen, dass die UV-Lichtquelle wenigstens teilweise von einem Hohlspiegel umgeben ist, der so orientiert ist, dass ein Abstrahlen von UV-Licht aus dem Innenraum vermieden wird, so dass das Bedienpersonal keiner schädlichen UV-Strahlung ausgesetzt ist.

Ein besonders zuverlässiger Schutz des Bedienpersonals ist gegeben, wenn der Innenraum während der UV-Behandlung lichtdicht verschlossen werden kann. Dazu kann man beispielsweise vorsehen, dass die vordere Öffnung des Gehäuses und/oder die Gehäuserückseite mit einer UV-dichten Klappe verschließbar sind. Die Klappe und/oder das Gehäuse können Sensoren und/oder Kontakte aufweisen, die gewährleisten, dass sich die Klappe in der Verschlussstellung befindet, bevor die UV-Lichtquelle aktiviert werden kann. Die Sensoren/Kontakte sind daher bevorzugt so ausgelegt sind, dass die UV-Lichtquelle bei geöffneter Klappe abgeschaltet wird.

Die UV-Lichtquelle kann dazu eine Steuerelektronik umfassen, die beispielsweise im Bodenbereich des Gehäuses angeordnet ist. Die Steuerelektronik ist vorzugsweise als herausziehbares Modul ausgebildet, was den Wartungs- und Instandsetzungsaufwand verringert.

Die UV-Lichtquelle kann kontinuierlich oder intermittierend betrieben werden. Beispielsweise kann die UV-Lichtquelle von einem Timer der Steuerelektronik gesteuert werden.

Gemäß einer bevorzugten Variante der erfindungsgemäßen Vorrichtung weist das Gehäuse eine Kühleinrichtung zum Kühlen wenigstens eines Teils des Gehäuses auf. Dabei werden bevorzugt zumindest die Teile des Gehäuses gekühlt, mit denen der Benutzer beim Auffüllen mit oder Entnehmen von Speisen in Kontakt kommen kann. Das Gehäuse kann aus unterschiedlichsten Materialien bestehen, ist aber typischerweise mindestens teilweise aus Edelstahl gefertigt.

Die Kühleinrichtung kann eine elektrische Kühlung, beispielsweise mittels Peltierelementen, oder eine Kühlfluidkreislauf mit Wärmetauscher umfassen. In vielen Fällen reicht jedoch bereits die an den zu kühlenden Gehäuseteilen vorbeigeführte Umgebungsluft zur wirksamen Kühlung aus. Daher umfasst die Kühleinrichtung vorteilhafterweise Ventilationsmittel, die einen Luftstrom aus der Umgebung entlang der zu kühlenden Teile des Gehäuses transportieren. Ventilationsmittel im Sinne der Erfindung umfassen insbesondere Rotationslüfter, beispielsweise in der Bauart eines Tangential- oder Walzenlüfters. Die zu kühlenden Teile des Gehäuses umfassen typischerweise zumindest einen Teil der die mindestens eine Öffnung umgebenden Gehäuseteile.

In einer Weiterbildung der erfindungsgemäßen Vorrichtung ist die wenigstens eine Öffnung an der Stirnseite des Gehäuses angeordnet. Die Ventilationsmittel können dabei in einer die Oberseite der wenigstens einen Öffnung bildenden Querleiste angeordnet sein.

Gemäß einer bevorzugten Ausführungsform der Erfindung erzeugen die Ventilationsmittel einen im Wesentlichen parallel zur Öffnungsebene verlaufenden Luftstrom. Dieser kann insbesondere vertikal nach unten auf die untere Begrenzung der Öffnung gerichtet sein. "Im Wesentlichen parallel" bedeutet im Sinne der Erfindung, dass es einen kleinen Winkel zwischen der Öffnungsebene und dem verlaufenden Luftstrom geben kann. Auch wird der Luftstrom im Allgemeinen nicht rein parallel sein, sondern vom Ventilationsmittel weg gerichtet leicht divergent verlaufen. Dieser, durch Kontakt mit den zu kühlenden Gehäuseteilen erwärmte Luftstrom bildet gewissermaßen einen "Warmluftvorhang" an der Gehäuseöffnung, der ein Eindringen von kühlerer Umgebungsluft ins den Gehäuseinnenraum behindert und so einerseits eine Abkühlung der zu erwärmenden Speisen verhindert und andererseits ein Eindringen von Partikeln oder Mikroorganismen und anderen Verschmutzungen aus der Umgebung in den Innenraum mit den dort befindlichen Speisen erschwert oder unmöglich macht.

In einer Ausgestaltung der erfindungsgemäßen Vorrichtung ist der Innenraum mittels Zwischenböden in im Wesentlichen vertikal voneinander beabstandete Fächer mit den jeweiligen Fächern zugeordneten Öffnungen unterteilt. "Im Wesentlichen vertikal" bedeutet im Sinne der Erfindung, dass es eine leichte Neigung der Fächer geben kann. Beispielsweise ermöglichen leicht gegen die Horizontale geneigte Fachböden, dass die einzelnen Fächer über eine Beschickungsöffnung mit Speisen beschickt werden können, die dann entlang der Fachbodenneigung zu einer gegenüberliegenden Entnahmeöffnung rutschen. In diesem Fall können sowohl die Beschickungs- als auch die Entnahmeöffnung mit einem Warmluftvorhang der oben beschriebenen Art versehen sein. Jedes der Fächer kann für sich einen eigenen Innenraum bilden und damit auch eine oder mehrere Strahlungsquellen und Mittel zur Ventilation aufweisen. Ferner können die Öffnungen durch Klappen oder Abdeckungen verschließbar sein.

In einer Weiterbildung der erfindungsgemäßen Vorrichtung ist der Luftstrom zusätzlich im Wesentlichen horizontal in den Innenraum gerichtet, wobei "im Wesentlichen horizontal" im Sinne der Erfindung wieder eine leichte Neigung der Fächer berücksichtigt. Die Luft strömt hierbei entweder entlang der oberen Innenwand des Gehäuses und/oder den Unterseiten der Zwischenböden oder durch in der oberen Innenwand des Gehäuses und/oder in den Zwischenböden gebildete Kanäle. Dabei wird die Luft an der Rückseite des Gehäuses weiter nach unten abgelenkt.

Das Ventilationsmittel in der erfindungsgemäßen Vorrichtung kann ein Lüftungselement umfassen, das ein in einem mit Lüftungsschlitzen versehenen Hohlraum montiertes Lüftungsgebläse aufweist.

Die elektromagnetische Strahlungsquelle ist typischerweise an der oberen Innenwand des Gehäuses und/oder den Unterseiten der Zwischenböden befestigt oder in diese integriert. Die Anzahl der Strahlungsquellen und deren Positionierung kann dabei an die Anforderungen, wie beispielsweise die Verteilung der warmzuhaltenden Speisen oder aber auch Kostengesichtspunkte der Vorrichtung, angepasst werden.

Vorteilhafterweise ist die elektromagnetische Strahlungsquelle als Halogenstrahler ausgestaltet und kann eine oder mehrere Wellenlängenbereiche im Infrarotspektrum abstrahlen. Die Strahlungsquelle ist insbesondere auf jene Wellenlängenbereiche optimiert, die bevorzugt von Speisen absorbiert werden, beispielsweise im Mikrowellenbereich. Der Spektralanteil kann aber auch einen Bereich im sichtbaren Licht zur Beleuchtung der Speisen umfassen.

Die Erfindung wird nun anhand von bevorzugten Ausführungsformen unter Bezugnahme auf die beigefügten Zeichnungen näher erläutert.
- Fig. 1: zeigt eine perspektivische Sicht auf ein Ausführungsbeispiel der erfindungsgemäßen Vorrichtung;
- Fig. 2a und 2b: zeigen seitliche Schnitte zweier Ausführungsbeispiele der erfindungsgemäßen Vorrichtung;
- Fig. 3a: zeigt ein teilweise zerlegtes Lüftungselement, wie es in einem Ventilationsmittel der erfindungsgemäßen Vorrichtung eingebaut sein kann;
- Fig. 3b: zeigt das aus Figur 3a zusammengebaute Lüftungselement und
- Fig. 4: veranschaulicht den Luftstrom in einem vorteilhaften Ausführungsbeispiel der erfindungsgemäßen Vorrichtung.

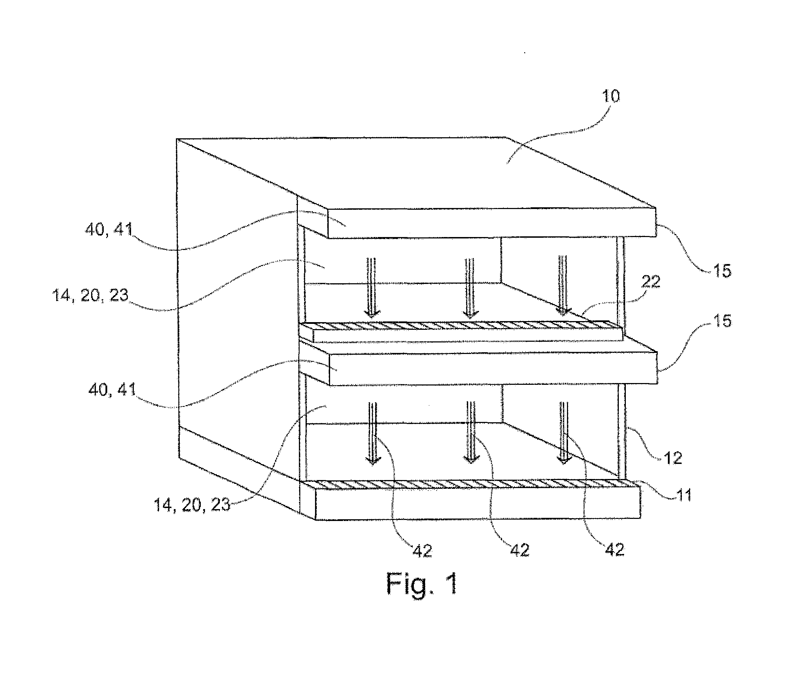

In Figur 1 ist eine erfindungsgemäße Vorrichtung zum Erwärmen oder Warmhalten von Speisen dargestellt. Die perspektivische Ansicht zeigt ein Gehäuse 10, an dessen Stirnseite 12 durch zwei Öffnungen 14 dahinterliegende Fächer 23 sichtbar sind. Die Fächer 23 bilden den Innenraum 20 des Gehäuses 10. Die oberen Ränder der Öffnungen 14 weisen Querleisten 15 auf, in denen eine Kühleinrichtung 40, insbesondere Ventilationsmittel 41, montiert sein können.

Durch Lüftungsschlitze 45, hier nicht gezeigt, kann ein durch die Ventilationsmittel 41 erzeugter Luftstrom 42 parallel zur Öffnungsebene nach unten gerichtet werden. Am unteren Rand der Öffnungen 14 trifft dieser Luftstrom 42 auf die zu kühlenden Teile 11 des Gehäuses 10. Diese Teile 11 des Gehäuses 10 stellen insbesondere die Gefahrenquellen für das Bedienpersonal dar, durch unvorsichtiges Hineingreifen in den Innenraum 20 sich zu verbrennen. Der Luftstrom 42 kann so eingestellt sein, dass einerseits die Temperatur im Innenraum 20 hoch genug ist, um die Speisen warm zu halten, andererseits kühl genug, damit das Bedienpersonal sich an den zu kühlenden Teilen 11 nicht verbrennt. Durch die Führung des Luftstroms 42 im Wesentlichen parallel zur Öffnung 14 kann gleichzeitig verhindert werden, dass durch Konvektion aus dem Innenraum 20 übermäßig Wärme in die Umgebung abgeführt würde.

An der oberen Innenwand 21 des Gehäuses 10 und /oder der Unterseite des Zwischenbodens 22 sind elektromagnetische Strahlungsquellen 30 montiert, die durch die perspektivische Ansicht hier verdeckt sind. Die Vorrichtung kann eine Vielzahl an weiteren Merkmalen zur Präsentation von Speisen aufweisen, die hier aus Gründen der Übersichtlichkeit nicht dargestellt sind. Diese umfassen insbesondere weitere Beleuchtungsmöglichkeiten sowie Beschilderung der Speisen für die Kundschaft oder das Bedienpersonal.

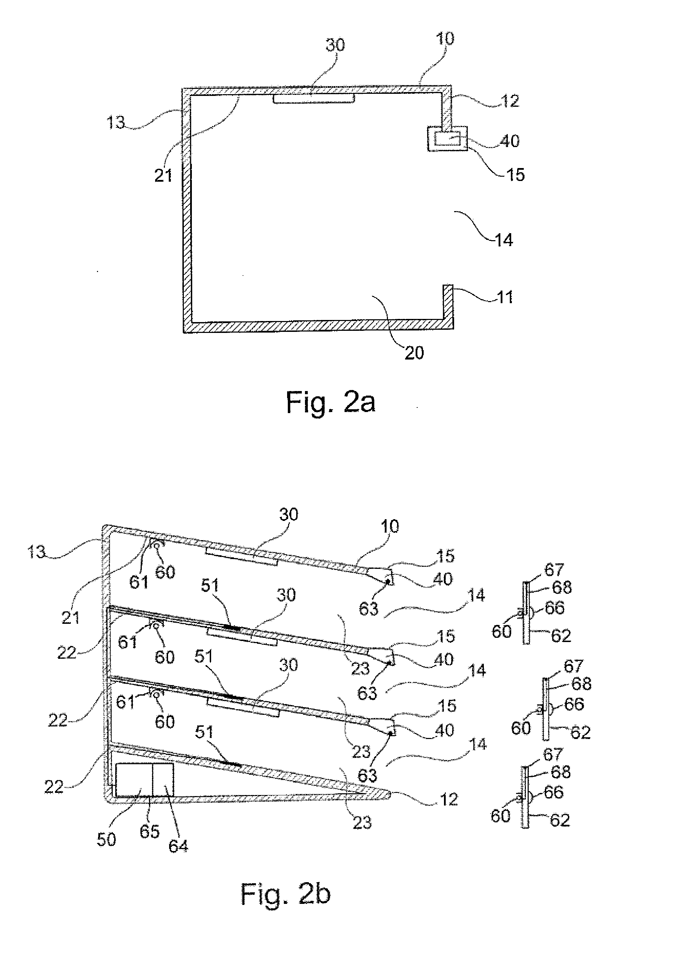

In Figur 2a ist ein seitlicher Schnitt einer einfachen Ausführungsform der erfindungsgemäßen Vorrichtung gezeigt. Das Gehäuse 10 umschließt einen Innenraum 20, der durch eine Öffnung 14 zugänglich ist, wobei die Öffnung 14 oben eine Querleiste 15 aufweist, in der eine Kühleinrichtung 40 montiert ist. Die Strahlungsquelle 30 ist an der oberen Innenwand 21 des Gehäuses 10 befestigt.

In Figur 2b ist ein seitlicher Schnitt einer weiteren Ausführungsform der erfindungsgemäßen Vorrichtung gezeigt. In diesem Beispiel ist der Innenraum 20 mittels Zwischenböden 22 in drei Fächer 23 unterteilt. Jedes der Fächer 23 hat eine Öffnung 14 mit integrierter Kühleinrichtung (40) zur Stirnseite 12 sowie je eine unter den Zwischenböden 22 oder der oberen Innenwand 21 befestigten eigenen Strahlungsquelle 30. In dem Gehäuse ist eine Temperatursteuerung 50 zur Steuerung der Strahlungsquelle 30 und/oder zur Steuerung der Kühleinrichtung 40 vorgesehen. Die Temperatursteuerung 50 umfasst im dargestellten Beispiel mehrere Temperatursensoren 51 zur Messung der Temperatur im Innenraum 20 des Gehäuses 10. Die Temperatursensoren 51 sind in die Oberseite der Zwischenböden 22 eingebaut, so dass jedes Fach 23 individuell angesteuert werden kann.

In Figur 2b sind außerdem zwei Varianten der erfindungsgemäßen Vorrichtung dargestellt, die UV-Lichtquelle 60 zur Desinfizierung umfassen.

Gemäß einer ersten Variante weist jeden Fach 23 wenigstens eine UV-Lichtquelle 60 auf, die von einem Hohlspiegel 61 umgeben ist, der so orientiert ist, dass der jeweilige Zwischenboden 22 mit UV-Licht bestrahlt werden kann, dass aber kein UV-Licht durch die stirnseitige Öffnung 14 oder eventuelle auf der Rückseite 13 vorgesehene Öffnungen austreten kann. Eine Schädigung des Bedienpersonals kann somit verhindert werden.

Da aber bei der ersten Variante über Spiegelungen und Streuungen an Gehäuseteilen ein UV-Lichtaustritt nicht völlig ausgeschlossen werden kann, ist gemäß einer bevorzugten Variante vorgesehen, dass die die Öffnungen 14 während einer UV-Desinfizierung des Gehäuses durch lichtdichte Klappen 62 verschlossen werden. Die Klappen 62 können zusätzlich oder alternativ zu den im Innenraum 20 angebrachten UV-Lichtquellen 60 mit entsprechenden UV-Lichtquellen 60 versehen sein. Die Klappen 62 können permanent am Gehäuse 10 beispielsweise mittels eines Scharniers am Gehäuse 10 angelenkt sein oder es kann sich (wie in Figur 2b dargestellt) um separate Bauteile handeln, die nur zum Zwecke des Desinfizierung in die Öffnungen 14 und/oder in entspreche Öffnungen auf der Rückseite 13 des Gehäuses 10 eingesetzt werden.

Das Gehäuse 10 kann beispielsweise Sicherheitskontakte 63 aufweisen, die mit einer UV-Steuerelektronik 64 verbunden sind und gewährleisten, dass die UV-Lichtquellen 60 nur bei eingesetzter Klappe 62 aktiviert werden können. Die Steuerelektronik kann auch so ausgelegt werden, dass einzelne Zwischenböden separat desinfiziert werden können, während andere Zwischenböden weiter benutzbar sind. Die Steuerelektronik 64 kann, beispielsweise zusammen mit der Temperatursteuerung 50, ein wartungsfreundliches herausziehbares Modul 65 bilden. Wenn die Klappe 62 als separates Bauteil ausgebildet ist, kann sie beispielsweise mit einem Griff 66 versehen sein, der es ermöglicht, sie einfach in die Gehäuseöffnung einzusetzen. Die Klappe 62 kann außerdem einen elektrischen Kontakt 67 aufweisen, der im eingebauten Zustand mit dem entsprechenden Kontakt 63 des Gehäuses in Verbindung kommt, so dass auch ohne Steuerungselektronik eine zuverlässige Betätigung der UV-Lichtquelle 60 der Klappe 62 ermöglicht wird. Dazu ist der Kontakt 67 über eine elektrische Stromversorgungleitung 68 mit der UV-Lichtquelle verbunden, so dass die UV-Lichtquelle nach Einsetzen der Klappe in die Gehäuseöffnung eingeschaltet wird.

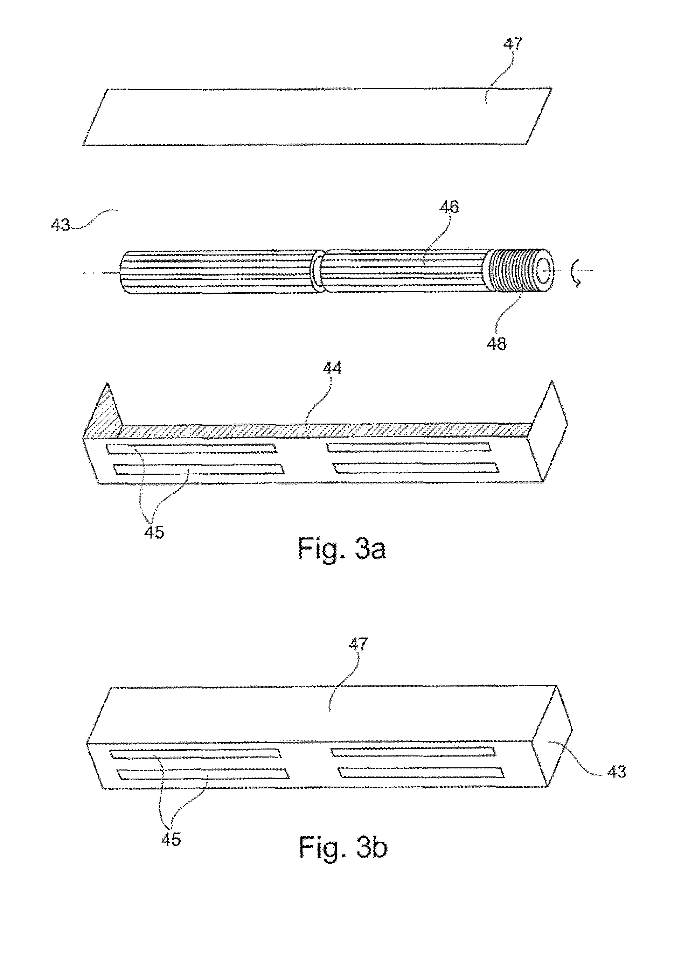

In Figur 3a ist ein Lüftungselement 43 gezeigt, wie es ein in eine Querleiste 14 integriertes Ventilationsmittel 41, wie in den Figuren 1, 2a und 2b gezeigt, umfassen kann. Im teilweise zerlegten Zustand in Figur 3a ist bei abmontierter Blende 47 der Blick in einen Hohlraum 44 frei, in dem ein Lüftungsgebläse 46 gelagert ist. Das Lüftungsgebläse 46 umfasst typischerweise einen Lüftungsmotor 48 und ist im gezeigten Beispiel als Tangentialventilator ausgebildet. Die an der Unterseite des Lüftungselements 43 vorgesehenen Lüftungsschlitze 45 ermöglichen bei Rotation des Lüftungsgebläses 46 einen ebenen Luftstrom 42 weg vom Lüftungselement 43. In Figur 3b ist das Lüftungselement 43 in zusammengebautem Zustand dargestellt.

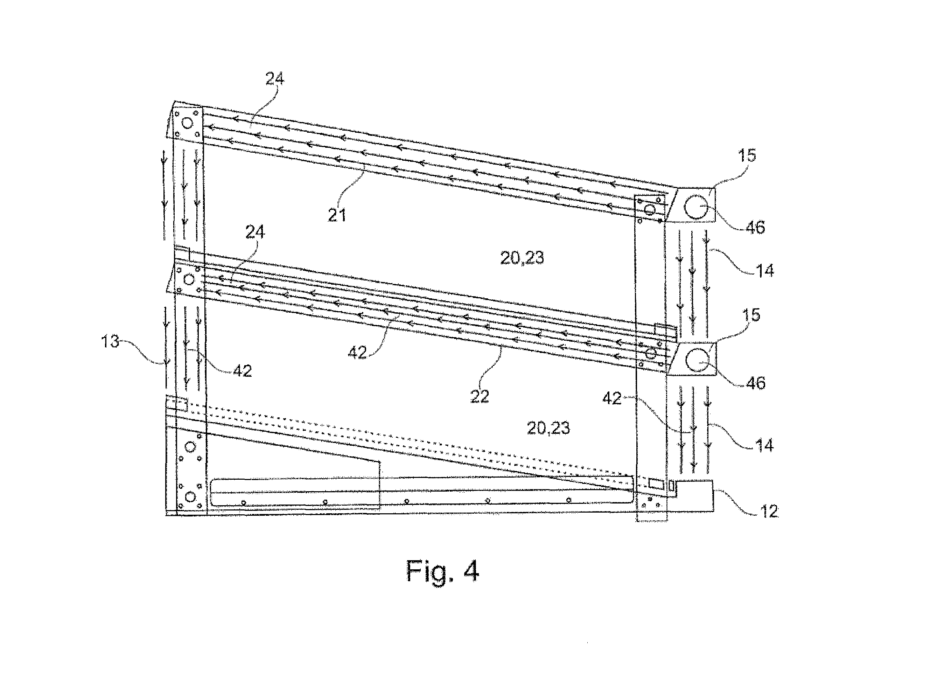

Die in Figur 4 dargestellte vorteilhafte Ausführungsform der erfindungsgemäßen Vorrichtung veranschaulicht in einem seitlichen Schnitt den durch die Ventilationsmittel 41 bewirkten Luftstrom 42. Die in die Querleisten 15 integrierten Lüftungsgebläse 46 bewirken einerseits einen nach unten gerichteten Luftstrom 42, der die Öffnungen 15 an der Stirnseite 12 überdeckt, andererseits wird ein weiterer Luftstrom 42 in den Innenraum 20 des Gehäuses 10 parallel zum Zwischenboden 22 und zur oberen Innenwand 21 erzeugt. Der im Innenraum 21 an die Rückseite 13 des Gehäuses 10 treffende Luftstrom 42 wird weiter nach unten abgelenkt.

Der nach unten gerichtete Luftstrom 42 auf sowohl der Stirnseite 12 als auch der Rückseite 13 des Gehäuses 10 bewirkt, dass der Innenraum 20 und damit die in den Fächern 23 liegenden Aufbewahrungszonen von einem Warmluftvorhang umgeben sind. Dieser Warmluftvorhang erschwert einerseits das Eindringen von Partikeln und Mikroorganismen in die Aufbewahrungszone und verhindert andererseits eine übermäßige Erwärmung des Bereichs der Öffnungen 14 des Gehäuses 10, wodurch die Gefahr, dass sich das Bedienpersonal am Gehäuse 10 verbrennt, reduziert wird.

Wie leicht einzusehen ist, können durch geeignete Gestaltung der oberen Innenwand 21 und der Zwischenböden 22 Kanäle 24 gebildet werden, beispielsweise durch doppelte Böden oder Strömungsrillen in den jeweiligen Bauteilen. Die Kanäle können so einer Divergenz des Luftstroms 42 entgegenwirken und zu einem effektiven Warmluftvorhang auch an der Rückseite 13 des Gehäuses 10 beitragen.

### Bezugszeichenliste

- 10: Gehäuse
- 11: zu kühlender Teil des Gehäuses
- 12: Stirnseite
- 13: Rückseite
- 14: Öffnung
- 15: Querleiste
- 20: Innenraum
- 21: Innenwand
- 22: Zwischenboden
- 23: Fach
- 24: Kanal
- 30: Wärmestrahlungsquelle
- 40: Kühleinrichtung
- 41: Ventilationsmittel
- 42: Luftstrom
- 43: Lüftungselement
- 44: Hohlraum
- 45: Lüftungsschlitze
- 46: Lüftungsgebläse
- 47: Blende
- 48: Lüftungsmotor
- 50: Temperatursteuerung
- 51: Temperatursensor
- 60: UV-Lichtquelle
- 61: Hohlspiegel
- 62: UV-dichte Klappe
- 63: Kontakt
- 64: UV-Steuerelektronik
- 65: herausziehbares Modul
- 66: Griff
- 67: Kontakt
- 68: Leitung

## Patentansprüche

1. Vorrichtung zum Erwärmen oder Warmhalten von Speisen, umfassend ein Gehäuse (10) mit mindestens einer Öffnung (14) zum Auffüllen oder zur Entnahme der Speisen,
einen Innenraum (20) der durch das Gehäuse (10) gebildet wird und
wenigstens eine, im Innenraum (20) des Gehäuses (10) angeordnete elektromagnetische Strahlungsquelle (30) zum Abstrahlen von Wärmestrahlung,
**dadurch gekennzeichnet**,
im Innenraum (20) des Gehäuses (10) wenigstens eine UV-Lichtquelle (60) zur Abstrahlung von UV-Strahlung angeordnet ist.

2. Vorrichtung gemäß Anspruch 1, **dadurch gekennzeichnet, dass** die UV-Lichtquelle (60) UV-Strahlung erzeugt, deren Spektrum Peaks bei 254nm und/oder bei 185 nm aufweist.

3. Vorrichtung gemäß Anspruch 2, **dadurch gekennzeichnet, dass** die UV-Lichtquelle (60) eine Niederdruck-Quecksilberdampflampe ist.

4. Vorrichtung gemäß einem der Ansprüche 1 bis 3, **dadurch gekennzeichnet, dass** die UV-Lichtquelle (60) wenigstens teilweise von einem Hohlspiegel (61) umgeben ist, der so orientiert ist, dass ein Abstrahlen von UV-Licht aus dem Innenraum (20) vermieden wird.

5. Vorrichtung gemäß einem der Ansprüche 1 bis 4, **dadurch gekennzeichnet, dass** die die Öffnung (14) des Gehäuses (10) mit einer UV-dichten Klappe (62) verschließbar ist, deren Verschlussstellung durch Sensoren und/oder Kontakte (63) überwacht wird.

6. Vorrichtung gemäß Anspruch 5, **dadurch gekennzeichnet, dass** die Sensoren/Kontakte (63) so ausgelegt sind, dass die UV-Lichtquelle (60) bei geöffneter Klappe (62) abgeschaltet wird.

7. Vorrichtung gemäß einem der Ansprüche 1 bis 6, **dadurch gekennzeichnet, dass** die UV-Lichtquelle (60) eine Steuerelektronik (64) umfasst, die im Bodenbereich des Gehäuses (10) angeordnet ist.

8. Vorrichtung gemäß Anspruch 7, **dadurch gekennzeichnet, dass** die Steuerelektronik (64) als herausziehbares Modul (65) ausgebildet ist.

9. Vorrichtung gemäß einem der Ansprüche 1 bis 6, **dadurch gekennzeichnet, dass** die UV-Lichtquelle (60) intermittierend betrieben wird.

10. Vorrichtung gemäß Anspruch 9, **dadurch gekennzeichnet, dass** die UV-Lichtquelle (60) von einem Timer der Steuerelektronik (64) gesteuert wird.

11. Vorrichtung nach einem der vorangegangenen Ansprüche, **dadurch gekennzeichnet, dass** das Gehäuse (10) eine Kühleinrichtung (40) zum Kühlen wenigstens eines Teils (11) des Gehäuses (10) aufweist, wobei die Kühleinrichtung (40) vorzugsweise Ventilationsmittel (41) umfasst, die einen Luftstrom (42) aus der Umgebung entlang der zu kühlenden Teile (11) des Gehäuses (10) transportieren.

12. Vorrichtung gemäß einem Anspruch 11, **dadurch gekennzeichnet, dass** die Ventilationsmittel (41) außerdem einen im Wesentlichen parallel zur Öffnungsebene verlaufenden Luftstrom (42) erzeugen.

13. Vorrichtung gemäß einem der Ansprüche 11 oder 12, **dadurch gekennzeichnet, dass** der Luftstrom (42) zusätzlich im Wesentlichen horizontal in den Innenraum (20) gerichtet ist, wobei die Luft entweder
- entlang der oberen Innenwand (21 ) des Gehäuses (10) und/oder den Unterseiten der Zwischenböden (22) oder
- durch in der oberen Innenwand (21) des Gehäuses (10) und/oder in den Zwischenböden (22) gebildete Kanäle (24)
strömt und dabei an der Rückseite (13) des Gehäuses (10) nach unten abgelenkt wird.

14. Vorrichtung nach einem der vorangegangenen Ansprüche, **dadurch gekennzeichnet, dass** die elektromagnetische Strahlungsquelle (30) ein Halogenstrahler ist.

15. Vorrichtung nach einem der vorangegangenen Ansprüche, **dadurch gekennzeichnet, dass** eine Temperatursteuerung (50) zur Steuerung der Strahlungsquelle (30) zum Abstrahlen von Wärmestrahlung und/oder zur Steuerung der Kühleinrichtung (40) vorgesehen ist, wobei die Temperatursteuerung (50) vorzugsweise wenigstens einen Temperatursensor (51) zur Messung der Temperatur im Innenraum (20) des Gehäuses (10) umfasst.
